Europäisches Patentamt

European Patent Office

Office européen des brevets

(11) Publication number: 0 335 038
A2

# EUROPEAN PATENT APPLICATION

(21) Application number: 88309971.5

(51) Int. Cl.⁴: **F28C 1/00 , F28F 25/08**

(22) Date of filing: 24.10.88

(30) Priority: 28.03.88 US 174349

(43) Date of publication of application:
**04.10.89 Bulletin 89/40**

(84) Designated Contracting States:
**AT BE CH DE ES FR GB GR IT LI LU NL SE**

(71) Applicant: **Wiltz, Vincent**

**Krotz Springs Louisiana 70750(US)**

(72) Inventor: **Wiltz, Vincent**

**Krotz Springs Louisiana 70750(US)**

(74) Representative: **Godsill, John Kenneth et al
Haseltine Lake & Co. Hazlitt House 28
Southampton Buildings Chancery Lane
London WC2A 1AT(GB)**

(54) Multi-level film fill assembly cooling tower.

(57) A cooling tower assembly comprising at least first and second layers of fill within the tower chamber, each of the first and second layers of fill having a source of water introduced above the fill for moving through gravity downthrough the fill during the cooling process. There is further included an upper fan member circulating at the top portion of the tower for drawing air through inlet panels along the walls of the tower through the first and second layers of fill to cool the water as it is percolating through the fill contents. The first and second layers of fill would be separated by a horizontal baffle member so that air pulled through the lower layer of fill would be prevented from the first layer, but would flow through a centrally located air flow chamber within the upper layer of fill to be drawn out of the chamber by the fan. In addition, water percolating down through the upper layer of fill would not contact the second layer of fill, but would be distributed into a water holding chamber in the lower portion of the tower via a plurality of drain pipes to prevent the overloading of water into the lower portion of fill during the water cooling process.

FIG. 1.

EP 0 335 038 A2

## MULTI-LEVEL FILM FILL ASSEMBLY COOLING TOWER

The apparatus of the present invention relates to cooling towers. More particularly, the present invention relates to a liquid-gas counter flow film type filled cooling tower including at least a first and second layer of fill providing a multiple capability of cooling water being distributed over the fill through the counter flow of fan drawn air.

It is well known in the art that a conventional cooling tower comprises a counter flow type horizontal layer of fill wherein a quantity of the water to be cooled is pumped in to be distributed over the fill so that air which is drawn from below and through the fill and is drawn out of the top of the tower serves to cool the water film being distributed through the fill in order to cool the water to a reasonable temperature to be re-utilized. The conventional cross flow towers would include a single vertical fill section with the water fed from an over head source and the air being drawn therethrough from air inlets at the side of the tower. A cross flow tower is inherently less efficient in the transfer of heat than is a counter flow tower based on a unit of fill. Another problem confronted with the cross flow cooling tower. is that the water which is loaded onto the top of the fill reach a maximum water load, and therefore any air attempting to be drawn through the fill in order to cool the water is substantially blocked as it may flow therethrough. That being the case, the amount of water being cooled through such a conventional tower from air being drawn through the fill from the top situated fan is very limited and serves as a disadvantage in attempting to cool large quantities of water.

Several patents have issued which address the cross flow or counter flow cooling towers, the most pertinent being as follows:

U.S. Patent No. 3,917,764 issued to Phelps, entitled "Sloped Film Filled Assembly Cooling Tower", relates to a cooling tower with the film fill assembly being on an inclined principal plane rather than the horizontal plane in order to effectuate cooling.

U.S. Patent No. 4,048,265 issued to Fordyce, entitled "De-icing Apparatus For Water Cooling Towers Including Slotted Distribution Basin And Selectively Actuateable Valve Mechanism", relates to an apparatus for de-icing evaporative water cooling towers and permitting selective delivery of hot water from the upper distribution basin to the outer margin of the tower for de-icing of the fill structure in order to maintain adequate air flow therethrough.

U.S. Patent No. 4,129,625 also issued to Fordyce, entitled "Selectively Controllable Water Curtain Damper For Inlet Faith Of Circular Water Cooling Tower", provides a de-icing apparatus similar to the previous Fordyce patent utilized in evaporative water cooling towers.

U.S. Patent No. 3,880,964 also issued to Fordyce, entitled "Hot Water Supply Distribution Structure For Cooling Towers", relates to a cross flow cooling tower having fire proof liquid supply means which includes a riser opening to an overhead film adjacent a hot water distributor for suppling hot liquid to the water distributor.

U.S. Patent No. 4,386,946 issued to Wurz, entitled "Water Cooling Tower Including A Suction Fan", the water cooling tower includes a cooling means and a suction fan further including a water catching channel around the wall of the air outlet passage at the bottom of the channel to collect water separated at and flowing along the air outlet passage channel.

U.S. Patent No. 3,764,121 issued to Fordyce, entitled "Hyperbolic Cross Flow Cooling Tower With Basins And Fill Integrated Into Shell", teaches a type of hyperbolic cooling tower having a fill assembly structure between concrete hot water distribution and cold water basins in the tower shell adjacent the air inlet of the shell.

Aspects of the present invnetion may be as set forth in claims 1, 9, 11 and 12 for example.

One embodiment of the invention is a cooling tower assembly comprising at least first and second layers of fill within a circular tower chamber, each of the first and second layers of fill having a source of water introduced above the fill for moving through gravity down through the fill during the cooling process. There is further included a plurality of upper fan member circulating at the top portion of the tower for drawing air through inlet panels along the wall of the tower through the first upper and second lower layer of fill to cool the water as it is percolating through the fill contents, the interior plurality of fan members drawing air through the lowermost portion of the chamber, and the outer perimeter of fan members drawing air from the uppermost portion of the apparatus. The first and second layers of fill would be separated by a horizontal baffle member so that air pulled through the lower layer of fill would not proceed upward through the first layer, but would flow through a centrally located air flow chamber to bypass the upper layer of fill to be drawn out of the chamber by the fan. In addition, water percolating down through the upper layer of fill would not percolate down through the second layer of fill, but would be distributed into a water holding chamber portion of the tower via a plurality of drain pipes bypassing the lower level of fill to prevent the overloading of water into the lower portion of fill during the water cooling process.

It will be seen that such a circular water cooling tower assembly including multi-layered of fill, increases the cooling capacity of the tower. Moreover, the layers of fill may be separated so that water percolating down through the upper layer does not flow into the lower layer but flows into the water holding chamber at the floor of the tower;

Furthermore, it can maintain an equal air flow distribution between the upper layers and lower layers of fill, to prevent overloading of either the first or second layers of fill;

Such an embodiment of multi-section water cooling tower assembly includes a first upper section having air drawn therethrough from an outer perimeter of fans, and a lower section having air drawn therethrough from an interior perimeter of fans, the outer and lower sections being isolated from one another. Moreover, it can accommodate a substantial increase in the quantity of water distributed and cooled through the cooling tower during the cooling process.

For a better understanding of the invention, and how the same may be carried into effect, reference will now be made by way of example to the accompanying drawings.

FIGURE 1 represents a cross-sectional view of the overall embodiment of the present invention;

FIGURE 2 represents a cross-sectional view along lines 2 - 2 in FIGURE 1

FIGURE 3 represents cross-sectional view along lines 3 - 3 in FIGURE 1

FIGURES 4, 5 and 6 represent overall exploded views of the conventional type fill that is utilized in a preferred embodiment of the present invention;

FIGURE 7 represents cross-sectional cut-away representational view of a hyperbolic cooling toner which may utilize the preferred embodiment of the present invention;

FIGURE 8 provides an elevational cross-sectional view of an additional embodiment of the present invention;

FIGURE 9 provides a cross-sectional view along lines 9 - 9 in FIGURE 8

FIGURE 10 provides a cross-sectional view along lines 10 - 10 of FIGURE 8; and,

FIGURE 11 provides a cross-sectional view of an additional embodiment of the present invention contained within a conically shaped modified hyperbolic cooling tower.

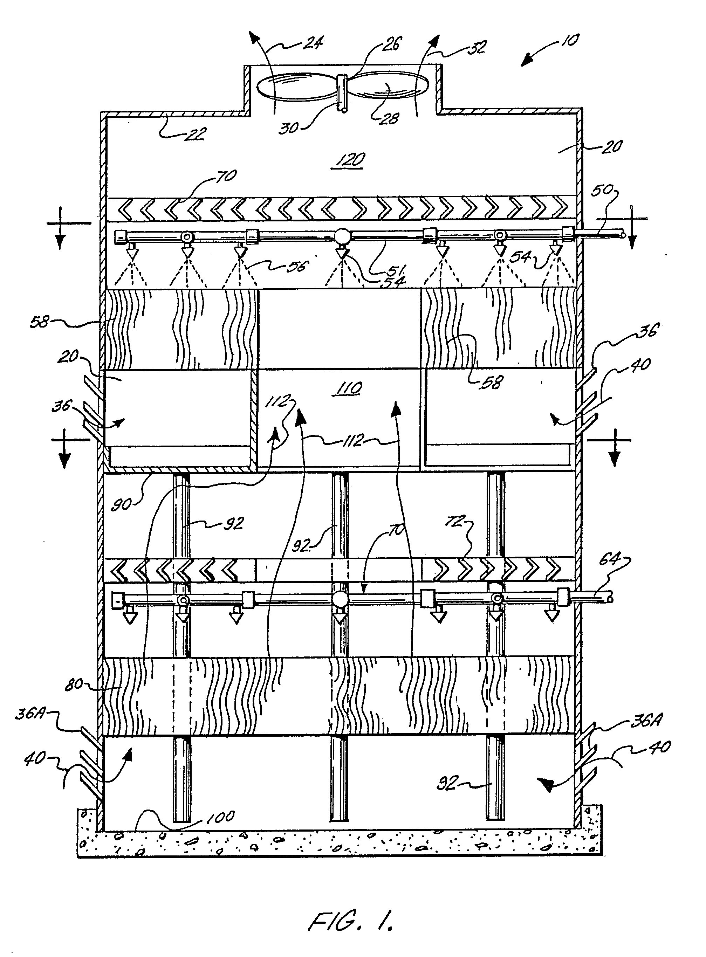

FIGURES 1 - 7 represents a preferred embodiment of a cooling tower assembly 10. Cooling tower assembly 10 is substantially comprised of a closed wall substantially rectangular shaped cooling tower frame 11, including upright walls 12, 14, 16, and 18, with the upright walls 12, 14, 16, and 18, defining a closed water cooling tower chamber 20 therewithin, of the type of cooling tower known as a conventional counter flow cooling tower, in which water containing substantial heat is percolated down through the tower and air is drawn through the tower to cool the water as it percolates through the tower.

The cooling tower frame 11 would further include a top portion 22, which would substantially define a means for sealing off the upper portion of the tower 10, with the top portion 22 including a centrally located air flow channel 24 housing a fan 26, with the fan 26 including a plurality of of vanes 28 whereby rotation of the fan 26 via shaft 30, would draw air through chamber 20 in the direction of Arrows 32, as will be discussed further.

Walls 12, 14, 16, and 18, further include a first upper plurality of air inlet panels 36 which are located along the length of each wall portion, at strategic points along the wall portion, so that air drawn in through the air inlet panels 36 in the direction of Arrows 40, flow through a portion of fill in order to serve the cooling purpose. In addition, as illustrated, the preferred embodiment of cooling tower 10 also includes a second lower series of air inlet panels 36A which serve a similar purpose to allow air flow 40 to enter tower 10, but at a different area in the tower 10, crucial to the overall invention.

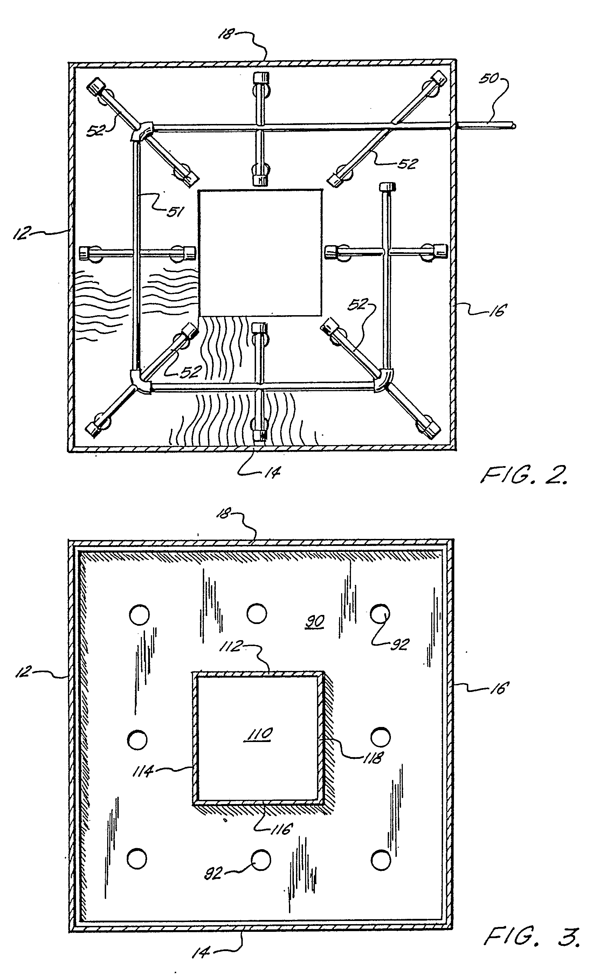

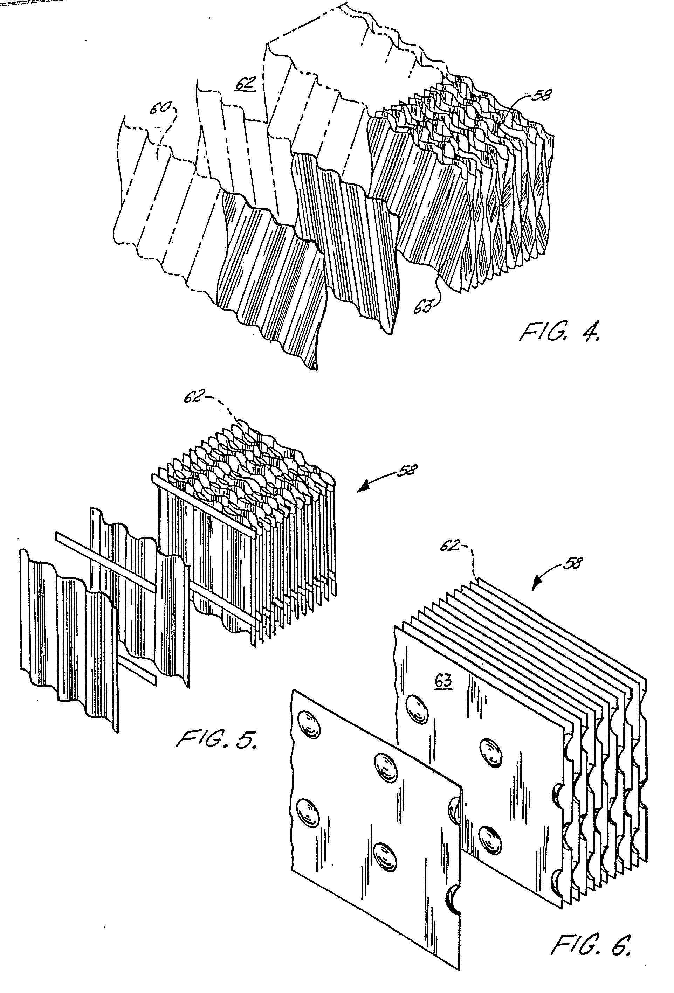

Turning now to the internal contents of tower 10, as seen specifically in the Figures, tower 10 would include an upper principal water inlet line 50 which would serve to introduce water containing an undesirable quantity of heat therein, to be removed by the tower during operation. As seen particularly in FIGURE 2, water inlet line 50 would form a substantially rectangular pattern of internal water line 51 within the confines of tower 10, including a plurality of spigot pipes 52 emanating therefrom, so that water could be distributed throughout the confines of the internal chamber 20 of tower 10 via water nozzles 54 as seen in cross-sectional view of FIGURE 1. Water (as seen in lines 56) which is being distributed from nozzles 54 would fall into a first upper layer of fill 58, which, in the preferred embodiment, as illustrated in FIGURES 4 - 6, may constitute a plurality of corrugated metal elements 60, having a flow space 62 therethrough, so that water flowing through fill 56 would form a "film" along the surface 63 of each plate 60, to provide a greater surface area for the air to contact the water in order to cool it as it flows through upper layer of fill 58. This combination would constitute the first means for cooling the water flowing through tower 10 during operation.

In addition, there is illustrated in FIGURE 1, a second lower water inlet pipe 64, which like upper pipe 50 allows the introduction of water into the lower portion of tower 10, utilizing an identical water distribution assembly as was previously illustrated in FIGURE 2, with the lower distribution of water assembly 70 likewise flowing through a second lower section of fill 80, again, the fill in the preferred embodiment constituting the type of fill that would be contained in the upper layer of fill as illustrated in FIGURES 4 - 6, and allowing again a second distribution of water into the tower for cooling therethrough. Therefore, it is seen that in this multiple layer cooling tower of the present invention, a capacity of water flowing therethrough that is cooled may be doubled in the process in this novel arrangement, and may in fact include additional layers of fill to provide a multiple layer of fill cooling tower assembly. In addition, as seen in FIGURE 1, cooling tower assembly would include a first upper assembly of splash plate 70 and a lower assembly of splash Plate 72 which would prevent movement of water into the plenum chamber 120 as air is forced upward through the fill layers 58 and 80 respectively. This is a conventional structure in these types of cooling towers.

Reference is now made to the Figures to illustrate the means by which the water flowing through the upper layer of fill 58 is prevented from flowing into the lower layer of fill 80 to prevent overload in the distribution of water therefrom. This means includes a lower horizontally located baffle plate 90 which is substantially positioned a distance below the upper portion of fill 58, so that any water exiting the upper layer of fill 58 flows onto the upper surface of baffle plate 90, is prevented from flowing past the plate 90 into the lower level of fill 80. This prevents the overloading of water percolating downward through the lower level of fill 80 and overloading that level. Further, baffle plate 90, as is illustrated in FIGURE 3, is provided with a plurality of downward depending flow pipes 92, which serve to allow any water flowing onto baffle 90 to flow down flow pipes 92 into the lower floor portion 100 of cooling tower 10, with each of the flow pipes 92 flowing through and bypassing the lower portion of fill 90, and not allowing any water from the upper portion of fill 58, which is percolated onto baffle plate 90, to make contact or to interfere with the water flowing through lower fill 80. As with any cooling tower, any water which has been cooled and is flowing onto the floor portion 100 of tower 10 is evacuated from tower 10 via a pumping means (not illustrated) so that the water may be redistributed through the system after the water has undergone cooling.

The system further includes a means for allowing air which is drawn upward through the lower level of fill 80 after having picked up a quantity of heat from the water cooled therein, from making contact with the upper layer of fill 58 so that the upper layer of fill 58 serves as a cooling means for the water being percolated therethrough as efficiently as possible. This means includes an internal air flow channel 110, as illustrated in FIGURE 3, defined by annular wall 114, the side walls serving to prevent air flowing into tower 10 through panels 36A, upward through lower fill layers 80 to contact the upper fill layer 58, since the four side walls are integrally attached to the lower baffle plate 100, and serves as a means to direct air flow 112, after flowing through the lower fill 80, to encounter the baffle member 100, and to be directed into the internal air flow channel 110, past the upper layer of fill 58, and up into air plenum chamber 120 to be drawn out of tower 10 via fan 26.

It should be noted as seen in FIGURE 1 that the fill contained in lower fill layer 80 spans the entire internal tower space 20 with the exception of the intrusion of downward depending flow pipes 92 which are directed through lower fill 80 to deposit water flowing from upper fill 58. This is unlike upper fill portion 58 which includes the internally located air flow chamber 110 for directing air upward through the tower without the air flowing through the lower space 80 to make contact with upper fill 58.

It is therefore foreseen that this type of cooling tower would allow the introduction of a greater quantity of water into the tower 10 to be cooled by at least two, although not limited to two layers of fill 58 and 80 in the tower, in such a manner that the water flowing downward through the upper layer of fill 58 does not contact and flow into the lower layer of fill 80, thus preventing any possibility of overload of the lower layer of fill due to the water that may percolate downward through the upper nozzle water distribution assembly 51. In addition, this novel assembly would allow any air flowing upward through the system which may have picked up heat from the water in the lower level of fill 80 not to flow through the upper layer of fill 58 and perhaps result in less cooling of the water in the upper layer 58 due to the fact that the air has been overheated from its passage to the lower level of fill 80. This novel combination allowing the distribution of water through the system in such a manner effectuates a greater cooling capacity, and is therefore quite novel in the art.

For purposes of construction, the construction of cooling tower 10 would be constructed of conventional materials and in particular, the type of fill that may be used in the tower 10 does not necessarily restrict it to the type of fill as illustrated in the Figures, but may be of any type of fill that would allow water to percolate downward therethrough to be cooled by air drawn up through the fill during the process. Although the water

4

film type of fill is stipulated in the drawings, the patent should not be limited to this type of fill and should allow the use of additional types of fill that may be utilized in the present state of the art or in the future.

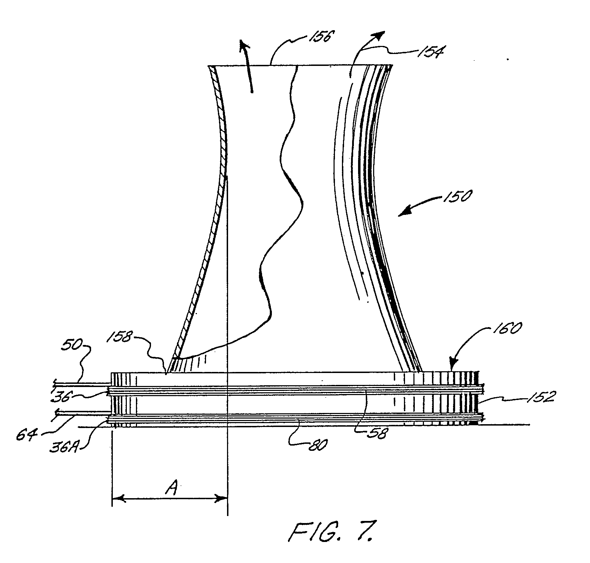

FIGURE 7 illustrates the type of cooling tower 150 which is known in the art as a hyperbolic cooling tower and in effect would allow air drawn from the lower portion of the tower structure 152 into the base of the tower to flow upward in the direction of Arrows 154 out of the open top end portion 156 of tower 150. Unlike the cooling tower construction in the preferred embodiment, a hyperbolic cooling tower of this sort does not contain a fan means, yet works upon the principle of the hyperbolic shape of the tower increasing the flow of air from the lower portion 158 to the upper portion 156 of the tower through the natural upward flow of hot air drafting therethrough.

Therefore, for purposes of construction, it should be noted that the lower rectangular portion 160 of tower 150, as seen in FIGURE 7, would represent in effect the type of rectangular configuration that is found in the tower 10 in the preferred embodiment, but yet not including the fan 26. Therefore, as represented in FIGURE 7, there would be included the upper inlet water line 50, the lower inlet water line 64, the upper series of inlet panels 36, the lower inlet panels 36A, and the upper fill portion 58, and the lower fill portion 80. Therefore, the means by which the air is drawn through the tower 150, as was explained earlier, is through the hyperbolic action of the air, yet the construction and functioning of the lower portion 160 as seen in FIGURE 7 would be in effect identical to the functioning of the tower as seen in the preferred embodiment. Although it is not clearly illustrated in FIGURE 7, that portion of the Figure designated as "A" could represent a cross section of that portion 160 of the tower as is illustrated in FIGURE 1. This cross section would of course include the upper internal air channel 110 for allowing air flow to bypass the upper fill layer 58, and would include the downward depending water drain pipes 92 that would bypass the lower fill layer 80 in order to drain off the water percolating through upper fill 58.

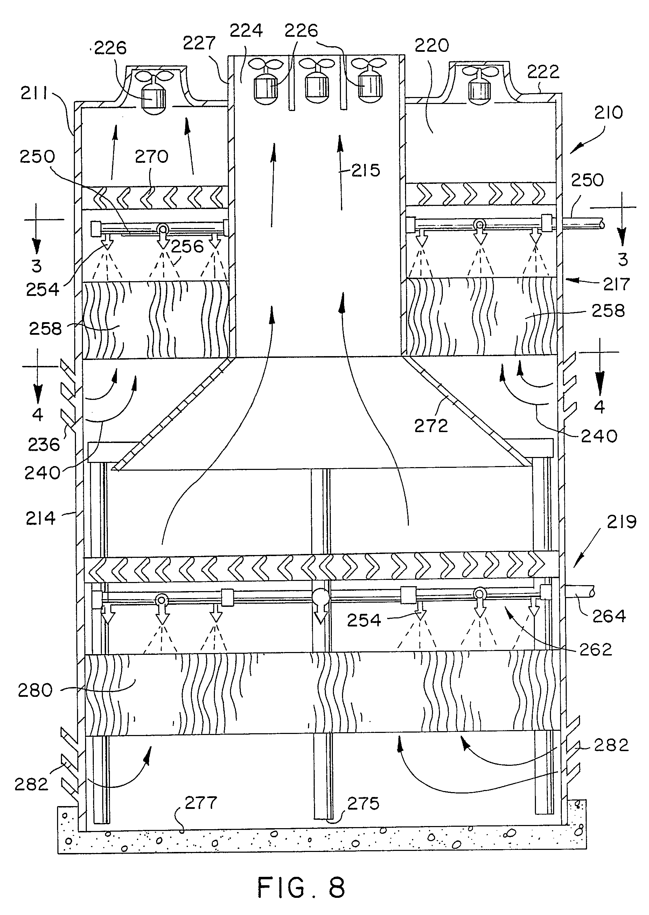

FIGURES 8 - 11 illustrate an additional embodiment of the apparatus of the present invention as illustrated by the number 210. Like principal embodiment apparatus 10, apparatus 210 would include a cooling tower assembly 211, which comprises a circular structure 213 having a continuous annular wall portion 214 which defined a closed water cooling tower chamber 220 therewithin, in which, as with the preferred embodiment, water containing substantial heat would be percolated down through the tower and air would be drawn through the tower to cool the water as it percolates therethrough. The cooling tower 213 would further include a top portion 222, for defining a means for sealing off the upper portion of tower 213, with the top portion 222 including a centrally located air flow channel 224, housing a plurality of fans 226, the fans configured in a configuration as is illustrated in FIGURE 8, fans 226 arranged in a pattern substantially whereby six fans 226 would be located around the exterior of the wall 227 of air channel 224, in a centrally located fan 226 in the center portion of the air channel 224. It should be noted that the configuration due to the presence of the other fans 226, as will be discussed further, the configuration of wall 227 enclosing air channel 224 is an annular configuration to enable a maximum number of fans 226 within the entire top portion 222 of tower 213 as will be discussed further. As seen in FIGURE 8, the additional fans 226 positioned around the outer perimeter of the top portion 22 of tower 213, in such a fashion as to create the maximum amount of air that will be pulled through the top 222 of tower 213 in the direction of Arrows 215 during the operation of the apparatus.

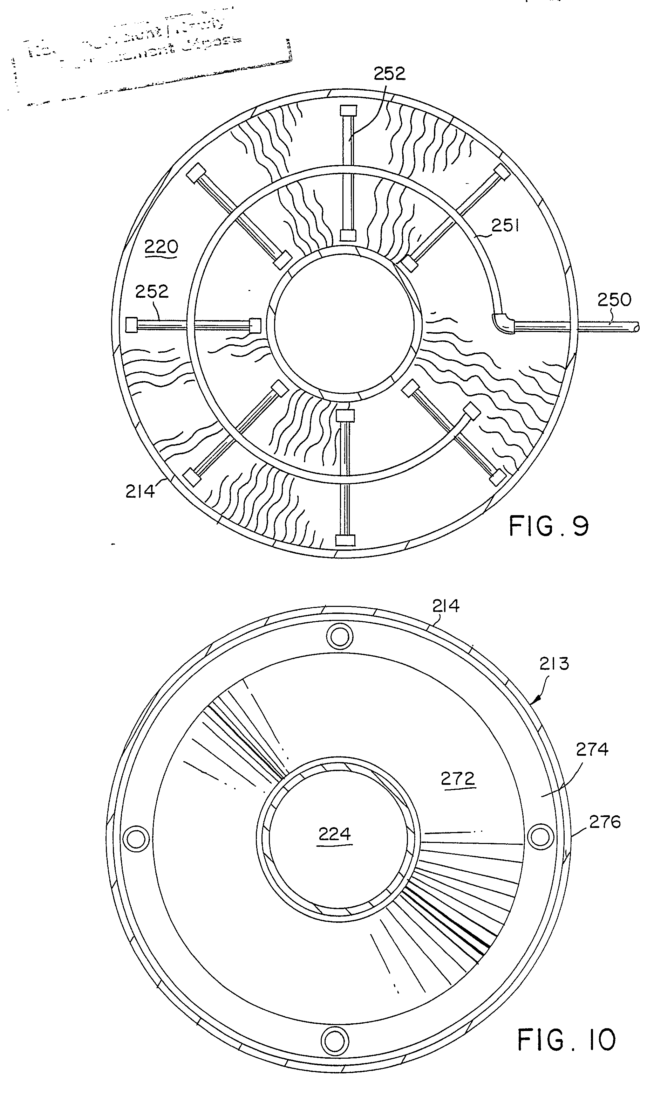

As seen in FIGURE 8, apparatus 210 is substantially divided into an upper air cooling section 217 and a lower air cooling section 219, both of which allows the cooling of water in the apparatus separate and independent of the cooling of water from the second section. Upper section 217 would include a first plurality of air inlet panels 236 situated along continuous wall 214, so that air drawn into the upper section 217, via the rotation of fan 226 exterior of wall 224, and would have the air drawn into the air inlet panels 236 upward in the direction of Arrow 240. Intermediate the fans 226 and the air inlet panels 236 there would be included a principal water inlet line 250 which would serve to introduce water containing undesirable quantity of heat to be removed by the tower during operation. As seen particularly in FIGURE 9, water inlet line 250 would form a substantially circular pattern of internal water lines 251 within the confines of space 220, including a plurality of spigot pipes 252 emanating therefrom, so that water could be distributed throughout the confines of the internal chamber 220 of tower 210 via water nozzles 254 as is illustrated in FIGURE 8. Water, as seen via lines 256 which is being distributed from nozzles 254 would flow into the upper layer of fill 258, which, in the preferred embodiment would be the same type of fill as would be illustrated in FIGURES 4 - 6 and as was discussed earlier in the specification. In addition, there would be included, as with the preferred embodiment circular splash plate 270 located intermediate the water inlet line 250 and the fans 226 so as to prevent any flow of water upward as the flow of air passes through fill 258 during its flow out of apparatus 210 through top 222. Thus, upper chamber 217 would have the ability to have air enter panels 236 flowing through fill 258 which is cooled by the flow of water 256 and up through the outer perimeter of fans 226 as the first upper cooling section of the apparatus; in a counterflow configuration.

Turning now to the lower cooling section 219, there is illustrated, in FIGURE 8, a second lower water distribution assembly 262, including inlet pipe 264 which like upper pipe 250 allows the introduction of water into the lower portion 219 of tower 210, utilizing an identical water distribution assembly as was previously illustrated in FIGURE 9, with the lower distribution of water assembly 262 likewise flowing through a second lower section of the fill 280. Again the fill in this embodiment constituting the type of fill that would be contained in the upper layer of fill 258, and allow again a second distribution of water into the section 219 of tower 210 for cooling therethrough. Likewise, there would be included a second lower splash plate 272 for preventing any flow of water upward as the water is percolated downward through fill 280.

As seen in FIGURE 8, the water percolating down through upper fill layer 258 would be isolated from the lower section 219, via annular baffle 272, illustrated in cross-section in FIGURE 10. As seen in the Figures, therefore any water percolating downward through upper fill 258 would encounter incline baffle 272, and move to the outer perimeter of annular drain portion 274, and be received by a plurality of drainage pipes 276 which would direct the water downward out of their lower end portion 275 onto floor portion 277.

As seen in the Figures, annular baffle 272 at its upper most end is connected directly to the annular wall 227 surrounding the central flow port 224, so as to isolate the air movement between the upper and lower sections as will be described further.

Turning now to the lower pool of section 219, there is provided again a primary water distribution section 262 having a water inlet 264 which would be identical to the water distribution system of the upper portion as seen in cross-section in FIGURE 9. Therefore, the detailed review of the system will not be necessary at this point. Additionally, there is included directly below the plurality of water nozzles 254, a second layer of fill 280, which again would allow water flowing downward from nozzles 254 to percolate downward to lower fill 280 likewise onto the floor portion 277 of the apparatus 210. As with the upper section, there is further included a plurality of air inlet panels 282, which would receive air drawn by fans 226 in the upper portion. It should be noted that as was described earlier, the plurality of fans 226 contained within the confines of space 224 as defined by the annular wall 227 within the apparatus, would confine the air being drawn by fans 226 for that air being received through panels 282, therefore would be isolated from the upper portion of air being drawn through panels 236. Therefore, in this particular embodiment the series of fans contained intermediate the outer wall 214 and the interior wall 227 would draw air through the upper portion of the apparatus through panels 236, while the fans 226 contained within the annular space confined by annular wall 227 would draw air through the lower panels 282 through the lower fill 280 to cool the water being introduced by the lower water system.

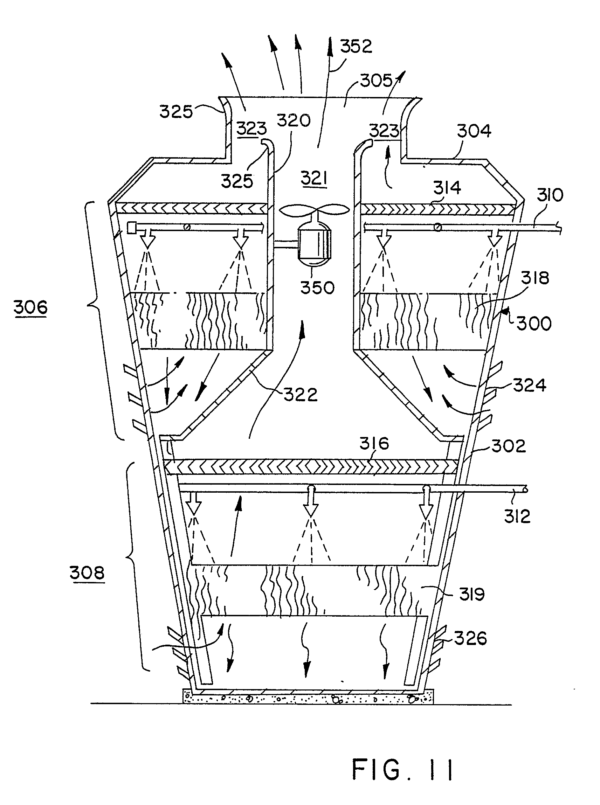

Turning now to a third embodiment as seen in FIGURE 11, there is provided a conically shaped tower 300 having an annular side wall 302, a top portion 304 with a central annular opening 305. In this particular embodiment, there is likewise included an upper cooling system 306 and a lower cooling system 308. Each of the cooling systems providing a water inlet system 310 and 312 respectively, of the type as illustrated in FIGURE 8, with an upper splash plates 314 and 316 respectively, and lower fill sections 318 and 319 respectively. As with the embodiment as illustrated in FIGURES 8 - 10, the upper system would be isolated from the lower system via centrally located flow tube 320, leading into angulated baffle 322 so that water and air introduced into the upper system would be introduced via flow panels 324 and air being introduced into the lower system would be introduced via flow panels 326, with each of the systems cooling the water flow through the fill through a counter flow system as seen in the preferred embodiment.

However, in this particular embodiment, there is provided a single fan 350 located within the flow channel 321 of central flow line 320, so that fan 350 would draw air from lower panels 326 through lower fill 319 and up through the confines of annular flow bore 321 out through the tower as seen in the direction of Arrows 352.

However, as seen in the Figures, the system would not include a series of fans around the outer perimeter of flow tower 320. The flow of air through the upper system 306 would be accomplished by a draft as created by the air being drawn through the tower via fan 350, so that a "vacuum" in effect would be had within annular space 323 between the upper end portion 325 of flow tower 321 and the upper exit flow tower 325, so that the air for the upper system would be drafted up through upper fill 318 and out of the principal flow tower 325 as seen in the Figure. Therefore, with economics of a single fan positioned as seen in FIGURE 11, the entire system could create an air flow through upper and lower panels to be cooled through the upper and lower systems of this particular embodiment.

What follows are tables which illustrate a comparison of the efficiency of a conventional counter flow cooling tower as seen in Table I with the multi-level cooling tower of the present embodiment as illustrated in Table II. Table III illustrates a comparison between the conventional and the multi-level towers.

Turning to Table I it should be noted that in a conventional tower which would have a water flow rate of 6100 gallons per minute (23091 l per minute) an inlet temperature of 111.5° F. (44° C) and exit, temperature of 87° F (30.5° C) with a cell length of 42′ (12.80m) and a cell width of 30′(9.14m) with a fill height of 7′ - (2.13m), in order to achieve a 97.2 % capacity, the total horse power required would be 136.1158.

As compared against the present embodiment in Table II, utilizing the exact specifics of water flow rate, inlet temperature and exit temperature, with a cell length of 78′ (23.77m) rather than 42′(12,8m) due to the doubling of the cell capacity, and a fill height of 5′(1.52m) the total horse power required to achieve 126.6 % capacity is 61.62521. Thus, from a comparison of the conventional vis-a-vis the present invention, it is clear that the present invention that these computer runs illustrates a thoroughly more efficient unit.

Table III illustrates computer run showing the regular counter flow cooling tower compared to the multi-level fill assembly cooling tower

For purposes of comparison, on the lower portion of the table, compared a single regular run against three runs by the multi-level fill assembly unit, the important static is the fact that the static pressure of the regular is .914 as opposed to the static pressure on the three units in the multiple run in the multi-fill assembly as .16, 3.40, and 2.97 respectively. In essence, a less static pressure would mean that a greater flow of air is flowing through the unit due to the combination of fills in combination with the water and air distribution assemblies.

TABLE I

| PROGRAM CTRFLO - COUNTERFLOW DESIGN/EVALUATION: INPUT DATE REPRINT | | |
|---|---|---|
| PROJECT DESCRIPTION tower # 23 EXXON | | |
| ANALYSIS | 1 | |
| INLET TEMPERATURE | 111.5 | (44° C) |
| EXIT TEMPERATURE | 87 | (30.6° C) |
| WET BULB TEMPERATURE | 82 | (27.8° C) |
| WATER FLOW RATE | 6100 | (23091 litres/minute) |
| ELEVATION | 48 | |
| DISSOLVED SOLIDS | 0 | |
| FILL TYPE CODE | 2 | |
| 14' VELOCITY RECOVERY STACK | 1 | |
| PRINTOUT CODE | 0 | |
| NO. OF CELLS | 1 | |
| CELL LENGTH | 42 | (12.80m) |
| CELL WIDTH | 30 | (9.14m) |
| FILL HEIGHT | 7 | (2.13m) |
| FAN DIAMETER | 20 | |
| EXISTING BHP | 125 | |
| COOLING TOWER EVALUATION | | |
| L/G | 1.215626 | |
| KaV/L | 2.627197 | |
| Q/A | 4.84127 | |
| ACFM PER FAN | 631048.4 | |
| EXIT AIR TEMP, F | 99.84123 | (37.68957° C) |
| STATIC PRESS, IN H20 | .9143869 | |
| VELOCITY, FPM | 500.8321 | |
| CHP | 1.083759 | |
| REQUIRED BHP | 136.1158 | |
| TOTAL HP REQUIRED | 136.1158 | THE % CAPACITY IS 97.20295 |

TABLE II

| PROGRAM CTRFLO - COUNTERFLOW DESIGN/EVALUATION: INPUT DATE REPRINT | | |
|---|---|---|
| PROJECT DESCRIPTION tower # 23 EXXON | | |
| ANALYSIS | 1 | |
| INLET TEMPERATURE | 111.5 | (44° C) |
| EXIT TEMPERATURE | 87 | (30.6° C) |
| WET BULB TEMPERATURE | 82 | (27.8° C) |
| WATER FLOW RATE | 6100 gal/m | (23091 litres/minute) |
| ELEVATION | 48 | |
| DISSOLVED SOLIDS | 0 | |
| FILL TYPE CODE | 2 film fill | |
| 14' VELOCITY RECOVERY STACK | 1 | |
| PRINTOUT CODE | 0 | |
| NO. OF CELLS | 1 | |
| CELL LENGTH | 78 | (23.77m) |
| CELL WIDTH | 30 | (9.14m) |
| FILL HEIGHT | 5 | (1.52m) |
| FAN DIAMETER | 20 | (6.10m) |
| EXISTING BHP | 125 | |
| COOLING TOWER EVALUATION | | |
| L G | 1.015468 | |
| KaV/L | 2.239127 | |
| Q/A | 2.606838 | |
| ACFM PER FAN | 747368.9 | |
| EXIT AIR TEMP, F | 97.00307 | (36.11281° C) |
| STATIC PRESS, IN H20 | .2976365 | |
| VELOCITY, FPM | 319.3884 | |
| CHP | 1.076074 | |
| REQUIRED BHP | 61.62521 | |
| TOTAL HP REQUIRED | 61.62521 | THE % CAPACITY IS 126.5556 |

COMMENTS: <u>WATER LOADING AND AIR FLOW COMPARISON</u>

| TOWER | SQ/FT WATER LOADING | WATER FLOW | AIR FLOW | HORSE POWER | STATIC PRESSURE | FILL HEIGHT |
|---|---|---|---|---|---|---|
| REGULAR | 4 84 (.45m) | 6,100 (23091 c/m) | 722,155 | 125 | .914 | 5' (1.52m) |
| MULTI- | 2.6 (.24m) | 6,100 " | 956,905 | 114 | .41539 | 3.3' (1.01m) |
| | 2.6 (.24m) | 6,100 " | 830,161 | 79.3 | .340 | 4.17' (1.27) |
| | 2 6 (.24m) | 6,100 " | 747,368 | 61 6 | .297 | 5' (1.52m) |
| 125% WATER FLOW | 3.25 (0.30) | 7,625 " | 934,211 (28864c/m) | 125 | .4721 | 5' (1.52m) |

## Claims

--1. A multi-level cooling tower assembly, comprising:
   a) at least one upright side wall portion having a first air inlet opening;

b) a water inlet for introducing water at a point above the first air inlet opening;

c) fill means positioned intermediate the air inlet opening and the water inlet for receiving water flow therethrough as water is introduced into the water inlet;

d) at least a second air inlet opening located below the first air inlet opening;

e) a second inlet means above the second air inlet opening for introducing water into the chamber;

f) at least a second layer of fill intermediate the second air inlet openings and the second water inlet means for receiving water flow flowing from the second water inlet means; and

g) means for preventing water flowing through the upper fill to flow into the lower fill during operation.

2. The assembly in Claim 1, further comprising means for preventing air flow from the lower inlet air means to flow into the first layer of fill.

3. The assembly according to claim 1 or 2 further including a fan member situated above the upper water inlet so that rotation of the fan member draws air through the first and second air inlet means.

4. The assembly according to claim 1,2 and 3 further including a plurality of air inlet means along each side wall of the tower.

5. The assembly according to any preceding claim, wherein the means for preventing water flowing through the first upper fill to flow into the second fill comprises a plurality of water flow pipes for receiving water from the upper fill and flowing through the lower fill but making no water contact with the lower fill.

6. The assembly according to any preceding claim, wherin the means for preventing air flowing through the lower fill to flow through the upper fill further comprises a centrally located walled chamber for directing air from the lower fill to flow through the chamber but making no air contact with the upper fill.

7. The assembly according to any preceding claim, wherein there is further included a plurality of splash plates to prevent water from splashing furing the drawing of air therethrough.

8. The assembly according to any preceding claim, wherein there is further provided a water receiving means at the bottom of the tower for receiving the cool water as the water flows therethrough.

9. A multilevel cooling tower assembly, comprising:

a) a plurality of upright side wall portions joined together to define a cooling space therewithin, at least one of said upright side wall portions having air inlet openings therethrough;

b) a first inlet for introducing water at a point above the air inlet openings;

c) upper fill means positioned intermediate the air inlet openings and the upper water inlet for receiving water flow therethrough as water is introduced into the water inlet;

d) at least second air inlet openings located below the first upper fill means;

e) second water inlet means above the second air inlet openings for introducing water into the chamber space;

f) at least a second lower fill intermediate the second air inlet openings and the second water means for receiving water flow flowing from the second water inlet means;

g) baffle means below the first fill means for preventing any water flowing downward through the upper fill means to flow into the lower fill means; and

h) channel means formed in the horizontal baffle means, for preventing air flow upward from the lower inlet air means to flow into the first fill means.

10. The apparatus in Claim 9, further including fan means at the top portion of the tower for drawing air upward through the first and second air inlet means.

11. A multi-level cooling tower assembly, comprising:

a) at least one upright side wall portion having an air inlet opening;

b) an inlet for introducing water at a point above the air inlet opening;

c) upper fill means positioned intermediate the air inlet opening and the water inlet for receiving water flow therethrough as water is introduced into the water inlet;

d) at least a second air inlet opening located below the first air inlet opening;

e) second inlet means above the second air inlet opening for introducing water into the chamber;

f) at least a lower layer of fill intermediate the second air inlet openings and the second water inlet means for receiving water flow flowing from the second water inlet means;

g) means for preventing water flowing through the upper fill to flow into the lower fill layer further comprising a plurality of water flow pipes for receiving water from the upper fill and flowing through the lower fill but making no water contact with the lower fill; and

9

h) means for preventing air flowing through the lower fill to flow through the upper fill further comprising a centrally located wall chamber for directing air from the lower fill to flow through the chamber but making no air contact with the upper fill.

12. A multi-level counterflow cooling tower assembly, comprising:

a) at least one upright side wall portion having a first, upper air inlet opening;

b) a first, upper water inlet for introducing water at a point above the first air inlet opening;

c) a first upper layer of fill positioned intermediate the first air inlet opening and the first water inlet for receiving water flow therethrough as water is introduced into the first water inlet;

d) a second, lower air inlet opening located below the first air inlet opening;

e) a second, lower water inlet above the second air inlet opening;

f) a second, lower layer of fill intermediate the second air inlet opening and the second water inlet means for receiving water flow flowing from the second water inlet, the lower layer of fill being vertically aligned with the upper layer of fill;

g) means for preventing water which has flowed through the upper layer of fill from contacting the lower layer of fill; and

h) channel means, for allowing air which has flowed through the lower layer of fill to flow from below the upper layer of fill to above the upper layer of fill without contacting the upper layer of fill.

FIG. 1.

FIG. 2.

FIG. 3.

FIG. 4.

FIG. 5.

FIG. 6.

*FIG. 7.*

FIG. 8

FIG. 9

FIG. 10

FIG. 11